# EUROPÄISCHE PATENTSCHRIFT

(11) **EP 1 567 789 B1**
(45) Veröffentlichungstag und Bekanntmachung des Hinweises auf die Patenterteilung: **29.11.2006**
(21) Anmeldenummer: 03758071.9
(22) Anmeldetag: 25.10.2003
(51) Int. Cl.: F16H 7/08

(54) **SPANNVORRICHTUNG FÜR EINE BRENNKRAFTMASCHINE**
TENSIONING DEVICE FOR AN INTERNAL COMBUSTION ENGINE
DISPOSITIF DE TENSION POUR UN MOTEUR A COMBUSTION INTERNE

(30) Priorität: 07.12.2002 DE 10257234
(43) Veröffentlichungstag der Anmeldung: 31.08.2005
(73) Patentinhaber: Schaeffler KG, 91074 Herzogenaurach (DE)
(72) Erfinder: ULLEIN, Thomas, 96158 Frensdorf (DE)
(86) Internationale Anmeldenummer: PCT/EP2003/011889
(87) Internationale Veröffentlichungsnummer: WO 2004/053358

(56) Entgegenhaltungen:
- DE-A- 2 343 748
- DE-A- 2 410 381
- DE-A- 19 717 409
- US-A- 3 358 522

## Beschreibung

### Gebiet der Erfindung

Die Erfindung betrifft eine Spannvorrichtung für einen Kettentrieb einer Brennkraftmaschine, mit einem Trägerkörper und einer an diesem verschwenkbar gelagerten Spannschiene, die mit einem Lagerauge auf einen Lagerzapfen des Trägerkörpers axial aufgesteckt und gehalten ist, entsprechend den Merkmalen des Oberbegriffs des Anspruchs 1.

### Hintergrund der Erfindung

Das gattungsgemäße Dokument US 3 358 522 A offenbart eine für Kettentriebe von Brennkraftmaschinen bestimmte Spannvorrichtung. Diese Vorrichtung schließt einen ortsfest angeordneten Trägerkörper ein. An einem Ende bildet der Trägerkörper einen Ansatz, der eine als Sacklochbohrung gestaltete, einen Längsschnitt aufweisende Aufnahme einschließt. Die Aufnahme ist für ein Lagerauge bestimmt, das einstückig mit einer Spannschiene in Verbindung steht. Die Aufnahme in Verbindung mit dem Lagerauge ermöglicht eine schwenkbare Spannschiene. Eine mit dem Trägerkörper verschraubtes Sicherungsblech fixiert die Spannschiene in der Einbaulage.

Die Druckschrift DE 23 43 748 A zeigt den Aufbau einer Spannrolle, die für einen Riementrieb bestimmt ist. Die Spannrolle ist dabei einer schwenkbaren Lagerplatte zugeordnet, die als ein tiefgezogenes Blechbauteil gestaltet ist. Dazu schließt die Lagerplatte einen als Hohlform ausgebildeten Lagerzapfen ein, der zur Aufnahme der wälzgelagerten Spannrolle bestimmt ist.

Eine solche Spannvorrichtung ist aus der Druckschrift DE 198 55 627 A1 bekannt. Dort ist die Spannschiene über ein Sicherungselement lösbar an einem mit dem Trägerkörper verbundenen Formelement befestigbar. Zur Lagefixierung der Spannschiene an dem Trägerkörper greift das Formelement in eine Ausnehmung der Spannschiene formschlüssig ein oder liegt an einer Seitenflanke der Spannschiene an.

### Zusammenfassung der Erfindung

Der Erfindung liegt die Aufgabe zugrunde, eine Spannvorrichtung mit einfacher Konstruktion der drehbaren Verbindung zwischen dem Trägerkörper und der Spannschiene zu schaffen, die auch eine leichte Montage erlaubt.

Diese Aufgabe wird erfindungsgemäß dadurch gelöst, dass der Trägerkörper mit dem Lagerzapfen als einstückiges, tiefgezogenes Blechbauteil ausgeführt ist, an welchem der Lagerzapfen eine topfförmige Hohlform aufweist. Auf diese Weise sind keine zusätzlichen Elemente erforderlich, was die Zuverlässigkeit erhöht und die Kosten erniedrigt. Die Herstellung der Trägerplatte erfolgt spanlos.

Die Spannschiene wird in einer für das Spannen eines Kettentriebes vorgesehenen Schwenkrichtung von einer Druckfeder beaufschlagt, die an dem Trägerkörper abgestützt und gehalten ist. Zu ihrer axialen Halterung an dem Lagerzapfen ist die Spannschiene mit einem Umgriff versehen sein, welcher sich an einem Ende der Spannschiene an beiden Seiten des plattenförmigen Trägerkörpers erstreckt.

Dabei kann die Spannschiene einen parallel zur Mittelachse des Lagerzapfens abstehenden Schnappvorsprung aufweisen, welcher sich in der Betriebsstellung der Spannvorrichtung in dem Bereich einer Anschlagfläche des Trägerkörpers befindet

### Kurze Beschreibung der Zeichnung

Ein Ausführungsbeispiel der Erfindung ist in der Zeichnung dargestellt und wird im folgenden näher beschrieben. Es zeigen:
- Fig. 1: eine perspektivische Außenansicht einer Spannvorrichtung;
- Fig. 2: eine perspektivische Rückansicht der Spannvorrichtung;
- Fig. 3: die seitliche Außenansicht der Spannvorrichtung;
- Fig. 4: eine Ansicht der gegenüber Figur 3 um 90° gewendeten Spannvorrichtung;
- Fig. 5: die Rückseite der Spannvorrichtung, mit welcher sie an einer Brennkraftmaschine anliegend befestigt wird;
- Fig. 6: den Schnitt VI-VI gemäß Figur 3 durch die Spannvorrichtung;
- Fig. 7: den Schnitt VII-VII gemäß Figur 3 durch die Spannvorrichtung.

### Ausführliche Beschreibung der Zeichnung

Die erfindungsgemäße Spannvorrichtung besteht aus nur drei Einzelteilen, und zwar aus einem Trägerkörper 1, einer Spannschiene 2 und einer Druckfeder 3. Der Trägerkörper 1 ist ein tiefgezogenes Blechbauteil und weist einen einstückig angeformten Lagerzapfen 4 auf. Auf diesen ist die Spannschiene 2, die ein Kunststoffbauteil sein kann, mit einem Lagerauge 5 axial aufgesteckt. Der Trägerkörper 1 weist zwei Befestigungsbohrungen 6 auf, welche es ermöglichen, ihn an der Brennkraftmaschine mit Schrauben zu befestigen.

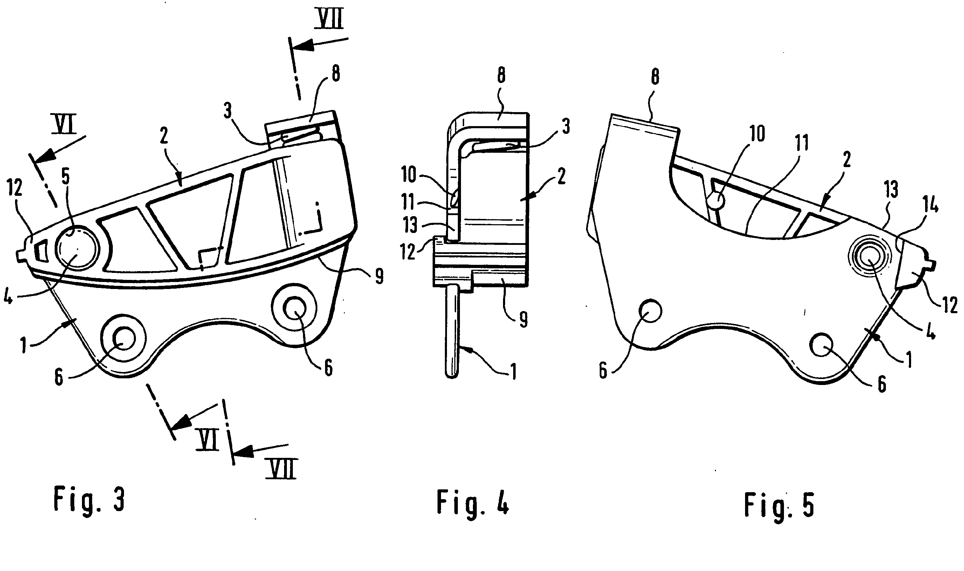

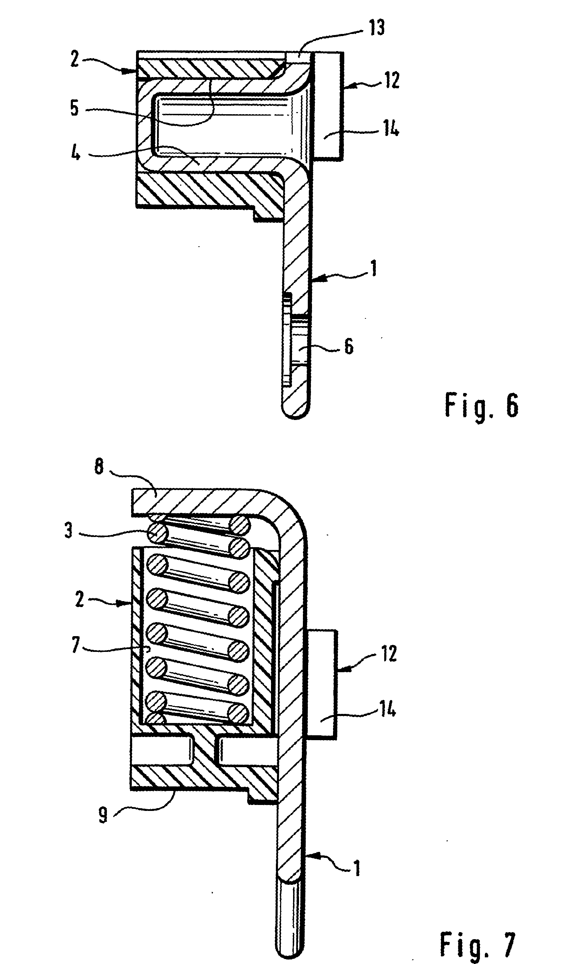

Wie Figur 3 zeigt, ist die Spannschiene 2 als langgestrecktes Bauteil ausgeführt, welches an dem linken Ende das Lagerauge 5 aufweist. Am rechten Ende ist die Druckfeder 3, welche als zylindrische Schraubendruckfeder ausgeführt ist, in eine Aufnahmebohrung 7 (Figur 7) eingesetzt. Die Druckfeder 3 stützt sich mit ihrem unteren Ende innerhalb der Aufnahmebohrung der Spannschiene 2 und mit ihrem oberen, außerhalb der Aufnahmebohrung 7 befindlichen Ende an einer abgewinkelten Lasche 8 des Trägerkörpers 1 ab. Auf diese Weise bewirkt die vorgespannte Druckfeder 3 eine Verschwenkung der für den Eingriff an einer Kette vorgesehenen Unterseite 9 der Spannschiene 2 um die Achse des Lagerzapfens 4.

Die Möglichkeit der Verschwenkung der Spannschiene 2 gegenüber dem Trägerkörper 1 wird von einem Schnappvorsprung 10 begrenzt, welcher einstückig mit der Spannschiene 2 ausgeführt ist und von dieser parallel zur Achse des Lagerauges 5 von der Spannschiene 2 nach außen absteht. In der Nähe des Schnappvorsprunges 10 bildet die Oberseite des Trägerkörpers 1 eine Anschlagfläche 11 für den Schnappvorsprung 10. Eine weitere Verschwenkung der Spannschiene 2 infolge der Wirkung der Druckfeder 3 ist gegenüber dem Trägerkörper 1 dann nicht mehr möglich, wenn der Schnappvorsprung 10 an der Anschlagfläche 11 anliegt. Die Verschwenkung der Spannschiene 2 in der entgegengesetzten Richtung wird von der Druckfeder 3 und der Lasche 8 des Trägerkörpers 1 begrenzt.

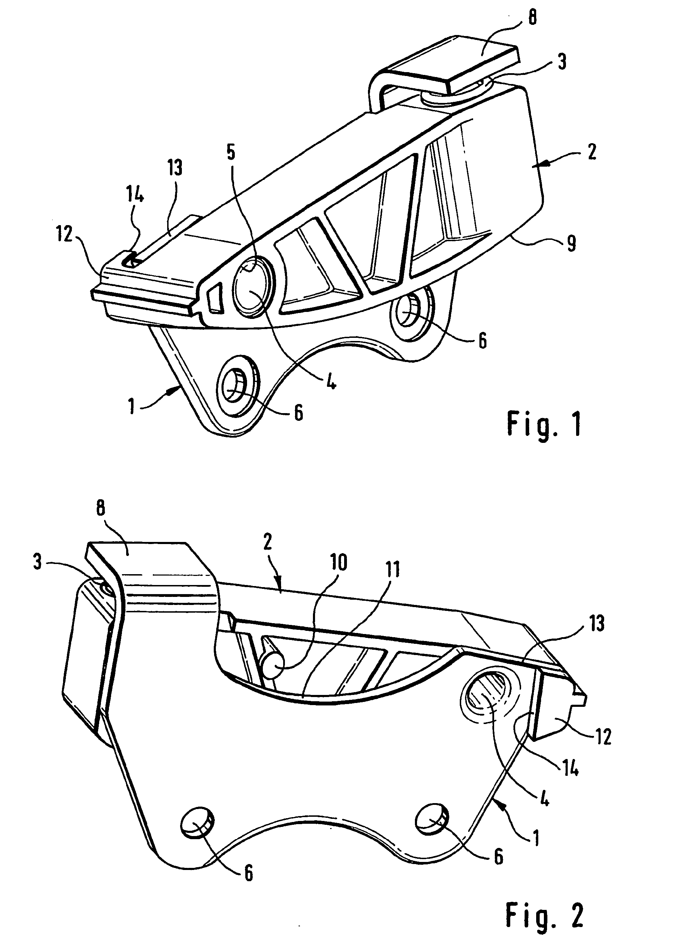

Die auf den Lagerzapfen 4 aufgesteckte Spannschiene 2 wird in Achsrichtung des Lagerzapfens 4 dadurch an dem Trägerkörper 1 axial gehalten, dass sie einen Umgriff 12 aufweist. Dieser ist an dem Ende der Spannschiene 2, welches sich im Bereich des Lagerauges 5 befindet, einstückig mit der Spannschiene 2 ausgeführt. Der Umgriff 12 umgreift an dieser Stelle den blechförmigen Trägerkörper 1, so dass weder in der einen axialen Richtung des Lagerzapfens 4 und des Lagerauges 5 noch in deren anderer axialer Richtung eine Verschiebung der Spannschiene 2 relativ zu dem Trägerkörper 1 erfolgen kann. Der Trägerkörper 1 ist im Bereich des Lagerzapfens 4 mit einer Abflachung 13 versehen. Bei der Montage der Spannschiene 2 an dem Trägerkörper 1 wird die Schiene aus einer Position, wie sie in Figur 3 dargestellt ist, gegenüber dem Trägerkörper 1 an dem Lagerzapfen 4 um etwa 90° im Uhrzeigersinn verdreht, so daß eine Abflachung 14 (Figur 2) an dem Umgriff 12 der Spannschiene 2 in Achsrichtung des Zapfens 4 über die Abflachung 13 am Trägerkörper 1 geschoben werden kann. Durch Zurückschwenken der Spannschiene 2 in die in der Zeichnung dargestellte Arbeitsposition erhält die Schiene ihre axial gesicherte Anordnung an dem Trägerkörper.

Anstelle der Druckfeder 3 kann in der Spannvorrichtung auch eine besondere mechanische oder hydraulische Spannvorrichtung eingebaut sein. Die Spannschiene 2, welche auf dem mit dem Trägerkörper 1 einstückig ausgeführten, tiefgezogenen Lagerzapfen 4 axial aufgesteckt ist, wird nach dem Aufstecken in ihre Arbeitsposition geschwenkt. Dabei sorgt der Umgriff 12 an der Spannschiene 2 dafür, dass die Spannschiene 2 axial gesichert ist. Darüber hinaus rastet in der Arbeitsposition der Schnappvorsprung 10 ein, der ein Verdrehen der Spannschiene 2 aus der Arbeitsposition heraus verhindert. Es ist auch möglich, die Spannschiene 2 auf einen unmittelbar an der Brennkraftmaschine ausgebildeten Zapfen aufzustecken.

### Bezugszahlenliste

- 1: Trägerkörper
- 2: Spannschiene
- 3: Druckfeder
- 4: Lagerzapfen
- 5: Lagerauge
- 6: Befestigungsbohrung
- 7: Aufnahmebohrung
- 8: Lasche
- 9: Unterseite
- 10: Schnappvorsprung
- 11: Anschlagfläche
- 12: Umgriff
- 13: Abflachung
- 14: Abflachung

## Patentansprüche

1. Spannvorrichtung für einen Kettentrieb einer Brennkraftmaschine, mit einem Trägerkörper (1) und einer an diesem verschwenkbar gelagerten Spannschiene (2), die mit einem Lagerauge (5) auf einen Lagerzapfen (4) des Trägerkörpers (1) axial aufgesteckt und gehalten ist, **dadurch gekennzeichnet, dass** der Trägerkörper (1) mit dem Lagerzapfen (4) als einstückiges, tiefgezogenes Blechbauteil ausgeführt ist, an welchem der Lagerzapfen (4) eine tassenförmige Hohlform aufweist und die Spannschiene (2) in einer für das Spannen eines Kettentriebes vorgesehenen Schwenkrichtung von einer an dem Trägerkörper (1) abgestützten und gehaltenen Druckfeder (3) beaufschlagt ist, wobei die Spannschiene (2) zu ihrer axialen Halterung an dem Lagerzapfen (4) mit einem Umgriff (12) versehen ist, welcher sich an einem Ende der Spannschiene (2) an beiden Seiten des plattenförmigen Trägerkörpers (1) erstreckt.

2. Spannvorrichtung nach Anspruch 1, **dadurch gekennzeichnet, dass** die Spannschiene (2) einen abstehenden Schnappvorsprung (10) aufweist, welcher sich in der Betriebsstellung in dem Bereich einer Anschlagfläche (11) des Trägerkörpers (1) befindet.

## Claims

1. Tensioning device for a chain and sprocket drive of an internal combustion engine, having a support body (1) and a tensioning rail (2) which is mounted pivotally thereon and is pushed axially onto a journal (4) of the support body (1), and held there, by means of a bearing eye (5), **characterised in that** the support body (1) takes the form, with the journal (4), of a one-piece deep-drawn sheet-metal component in which the journal (4) has a saucer-shaped hollow shape and the tensioning rail (2) is urged in a direction of pivoting, provided for tensioning a chain and sprocket drive, by a pressure spring (3) which is supported and held against the support body (1), with the tensioning rail (2) being provided, for the purpose of holding it axially against the journal (4), with a gripping part (12) which extends at one end of the tensioning rail (2) on both sides of the plate-shaped support body (1).

2. Tensioning device according to Claim 1, **characterised in that** the tensioning rail (2) has a protruding snap-type projection (10) which in the operating position is located in the region of an abutment face (11) of the support body (1).

## Revendications

1. Dispositif de tensionnement pour l'entraînement par chaîne d'un moteur à combustion interne, comprenant un corps porteur (1) et un rail de tensionnement (2) monté à pivotement sur celui-ci, lequel est enfoncé axialement et maintenu avec un trou de palier (5) sur un tourillon de palier (4) du corps porteur (1), **caractérisé en ce que** le corps porteur (1) est réalisé avec le tourillon de palier (4) sous la forme d'un composant en tôle d'une seule pièce embouti, sur lequel le tourillon de palier (4) présente une forme creuse en forme de tasse et le rail de tensionnement (2) est sollicité, dans une direction de pivotement prévue pour le tensionnement d'un entraînement par chaîne, par un ressort de pression (3) supporté et maintenu sur le corps porteur (1), le rail de tensionnement (2) étant pourvu pour sa fixation axiale sur le tourillon de palier (4) d'un serrage (12) qui s'étend à une extrémité du rail de tensionnement (2) des deux côtés du corps porteur (1) en forme de plaque.

2. Dispositif de tensionnement selon la revendication 1, **caractérisé en ce que** le rail de tensionnement (2) présente une projection d'encliquetage saillante (10) qui se trouve dans la région d'une surface de butée (11) du corps porteur (1) dans la position de fonctionnement.
